# EUROPÄISCHE PATENTSCHRIFT

(11) **EP 3 123 145 B1**
(45) Veröffentlichungstag und Bekanntmachung des Hinweises auf die Patenterteilung: **06.06.2018**
(21) Anmeldenummer: 15703882.9
(22) Anmeldetag: 11.02.2015
(51) Int. Cl.: G01G 1/00, G01G 17/04, G01N 25/56, G01N 5/04

(54) **MESSGERÄT ZUR THERMOGRAVIMETRISCHEN MATERIALFEUCHTEBESTIMMUNG**
MEASURING DEVICE FOR THE THERMOGRAVIMETRIC DETERMINATION OF MATERIAL MOISTURE
APPAREIL DE MESURE POUR LA DÉTERMINATION THERMOGRAVIMÉTRIQUE DE L'HUMIDITÉ DES MATÉRIAUX

(30) Priorität: 27.03.2014 DE 102014104279
(43) Veröffentlichungstag der Anmeldung: 01.02.2017
(73) Patentinhaber: Sartorius Lab Instruments GmbH & Co. KG, 37079 Göttingen (DE)
(72) Erfinder: DUDDA, Olaf, 37081 Göttingen (DE); SPANNAGEL, Wilfried, 37081 Göttingen (DE); FÄRGER, Daniel, 37154 Northeim (DE)
(74) Vertreter: Schneider, Peter Christian
(86) Internationale Anmeldenummer: PCT/EP2015/000301
(87) Internationale Veröffentlichungsnummer: WO 2015/144275

(56) Entgegenhaltungen:
- US-A1- 2001 039 831
- US-A1- 2013 081 453
- "Operating Instructions Moisture Analyzer HB43-S", , 1. Dezember 2011 (2011-12-01), XP055183561, Gefunden im Internet: URL:http://us.mt.com/dam/product_organizat ions/laboratory_weighing/moisture/products /hb43_s/documentation/en/HB43-S_OI_en_1178 0961A.pdf [gefunden am 2015-04-16]
- "Instruction Manual MB35 Moisture Analyzer", , 1. Januar 2002 (2002-01-01), XP055183555, Gefunden im Internet: URL:http://www.scalenet.com/pdf/Ohaus_MB35 _Moisture_Balance_Manual.pdf [gefunden am 2015-04-16]

## Beschreibung

### Gebiet der Erfindung

Die Erfindung betrifft ein Messgerät zur thermogravimetrischen Materialfeuchtebestimmung, umfassend
- eine als eine Waage ausgebildete Basis mit einer wenigstens einen Wägeraumboden bildenden Basisoberfläche, die von einem Wägetellerträger durchsetzt ist, und
- eine schwenkbar mit der Basis verbundene Haube, welche einen Wägeraumdeckel und Wägeraumwandungen sowie wenigstens ein in den von den Wägeraumwandungen umgriffenen Raum hinein wirkendes Heizelement, welches mit einer Leistungselektronik in elektrischem Kontakt steht, aufweist.

### Stand der Technik

Derartige Messgeräte, die hier synonym auch als Trocknungswaagen bezeichnet werden sollen, sind bekannt aus der EP 2 574 900 A1.

Bei einer Trocknungswaage handelt es sich, vereinfacht ausgedrückt, um eine Waage, die mit einem abgeschlossenen, heizbaren Wägeraum, in welchem das Wägegut auf einem mit einer Wägevorrichtung über einen Lastaufnehmer verbundenen Wägeteller positionierbar und mittels einer Heizvorrichtung soweit aufheizbar ist, dass die im Wägegut enthaltene Feuchtigkeit wenigstens teilweise entweicht. Der mit dem Feuchtigkeitsverlust verbundene Gewichtsverlust des Wägegutes wird mittels der Wägevorrichtung registriert, sodass aus dem registrierten Gewichtsverlauf Rückschlüsse auf feuchterelevante Eigenschaften des Wägegutes geschlossen werden können. Letzteres erfolgt typischerweise in einer an die Wägevorrichtung angeschlossenen Steuerelektronik, die auch zur Ansteuerung der Leistungselektronik verwendet wird, mittels welcher das Heizelement mit seiner erforderlichen Betriebsspannung versorgt wird. Das Heizelement selbst kann beispielsweise als Infrarot-Strahlung abstrahlender Heizstab als Mikrowellenstrahler oder in anderer Weise realisiert sein.

Die oben genannte, gattungsbildende Druckschrift offenbart eine Basis, die ein äußeres Gehäuse umfasst, in welchem sowohl die Wägevorrichtung als auch die Steuer- und die Leistungselektronik enthalten sind. Die obere Oberfläche des Gehäuses ist gestuft gestaltet und bildet sowohl den Wägeraumboden als auch die rückwärtige, vom normalen Benutzer abgewandte Wägeraumwandung. Diese wird horizontal von einem Lastarm durchsetzt, welcher als Wägetellerträger fungiert und die mechanische Verbindung zwischen dem im Wägeraum angeordneten Wägeteller und der innerhalb des Gehäuses angeordneten Wägevorrichtung bildet. Schwenkbar an dem Gehäuse angelenkt ist eine Haube, welche die beiden seitlichen und die vordere Wägeraumwandung sowie einen Wägeraumdeckel bildet und unterhalb des Wägeraumdeckels das Heizelement enthält. Im geschlossenen Zustand der Haube kontaktiert das Heizelement eine Kontaktstelle der Basis, die elektrisch mit der Leistungselektronik im Inneren des Gehäuses verbunden ist. Zum Öffnen der Haube kann diese in ihre Offenstellung verschwenkt werden, sodass der Wägeteller für eine Beschickung mit Wägegut zugänglich ist. Nachteilig bei der bekannten Vorrichtung ist die schlechte Reinigbarkeit des Wägeraums. Gerade bei Trocknungswaagen verdampfen, je nach speziellem Wägegut nicht nur reines Wasser, sondern auch andere Flüssigkeiten, die sich an den Wägeraumwandungen niederschlagen und dort schwer entfernbare Beläge bilden können. Dies stellt nicht nur ein optisches Problem dar; vielmehr besteht auch das Risiko der Kontamination späterer Wägegut-Ladungen. Das Problem verschärft sich durch das in der Haube angeordnete Heizelement, durch welches die genannten Beläge fest in das Wandungsmaterial eingebrannt werden können.

Die Druckschrift "Operating Instructions Moisture Analyzer HB43-S", Mettler Toledo, 1. Dezember 2011 (2011-12-01), XP055183561, veröffentlicht unter URL:http://us.mt.com/dam/product_organizations/laboratory_weighing/moisture/products/ hb43_s/documentation/en/HB43-S_OI_en_11780961A.pdf, offenbart eine ähnliche Trocknungswaage, bei der allerdings zusätzlich die vordere Wägeraumwandung in die Basis integriert ist. Das Problem der Reinigung wird bei dieser Vorrichtung gegenüber dem zuvor genannten Stand der Technik noch verschärft.

Die identische Vorrichtung ist auch in der US 2001/0039831 A1 beschrieben.

Die Druckschriftt "Instruction Manual MB35 Moisture Analyzer", Ohaus Corporation, 1. Januar 2002 (2002-01-01), XP055183555, veröffentlicht unter URL: http://www.scalenet.com/pdf/Ohaus_MB35_Moisture_Balance_Manual.pdf offenbart eine ähnliche Trocknungswaage, bei der allerdings weiter zusätzlich auch die seitlichen Wägeraumwandungen in die Basis integriert sind. Das Problem der Reinigung wird bei dieser Vorrichtung gegenüber dem zuvor genannten Stand der Technik noch weiter verschärft. Die Haube enthält seitliche Hitzeschutzschilde, die im geschlossenen Zustand in den Wägeraum eintauchen und die basisfesten, seitlichen Wägeraumwandungen gegen die von dem Heizelement im Deckel der Haube erzeugte Hitzestrahlung abschirmen. Diese repräsentieren allerdings jeweils zwei weitere Oberflächen die für Beschlag durch verdampfende Flüssigkeiten anfällig sind.

### Aufgabenstellung

Es ist die Aufgabe der vorliegenden Erfindung, eine leichter reinigbare Trocknungswaage zur Verfügung zu stellen.

### Darlegung der Erfindung

Diese Aufgabe wird in Verbindung mit den Merkmalen des Oberbegriffs von Anspruch 1 dadurch gelöst, dass die Haube aus zwei separaten Modulen besteht, nämlich einem das Heizelement und die Leistungselektronik umfassenden Elektronikmodul und einem den Wägeraumdeckel und sämtliche Wägeraumwandungen umfassenden Mechanikmodul, wobei das Mechanikmodul mit dem Elektronikmodul starr und reversibel derart gekoppelt ist, dass das von einem schwenkbar mit der Basis verbundenen und die Leistungselektronik umschließenden Grundkörper des Elektronikmoduls abstehende Heizelement durch einen korrespondierenden Durchbruch in der rückwärtigen Wägeraumwandung ragt.

Bevorzugte Ausführungsformen sind Gegenstand der abhängigen Ansprüche.

Zunächst sieht die Erfindung vor, die Haube aus mehreren, vom Benutzer leicht separierbaren bzw. zusammensetzbaren Bauelementen, den beiden Modulen, auszubilden. Die beiden Module sind in erster Linie nach funktionalen Aspekten unterteilt. Die gesamte für die Heizung erforderliche Elektronik, d.h. das Heizelement selbst sowie die es mit seiner Betriebsspannung versorgende Leistungselektronik ist, im Elektronikmodul zusammengefasst. Die rein mechanisch wirkenden Komponenten, d.h. die vollumfänglichen Wägeraumwandungen und der Wägeraumdeckel, sind hingegen im Mechanikmodul zusammengefasst. Dieser Ansatz ist jedoch insofern problematisch, als es für eine effiziente Heizung des Wägegutes zwingend erforderlich ist, dass das Heizelement, also ein Teil des Elektronikmoduls, in den Wägeraum, d.h. den vom Mechanikmodul umfassten Raum, hineinragt. Dieses Problem wird erfindungsgemäß dadurch gelöst, dass das Elektronikmodul, welches, wie weiter unten noch näher ausgeführt, typischerweise auch elektrische Verbindungen zur Basis aufweisen muss, schwenkbar an der Basis, insbesondere an deren rückwärtigem Bereich angelenkt ist und einen kompakten Grundkörper aufweist, in dem die Leistungselektronik untergebracht ist. Von diesem Grundkörper steht das eigentliche Heizelement nach vorne gerichtet ab. Die rückwärtige Wägeraumwandung, die Teil des Mechanikmoduls ist, weist einen korrespondierende Durchbruch auf, durch welchen hindurch das Heizelement ragt. Die Kopplung zwischen Mechanikmodul und Elektronikmodul ist reversibel, sodass das gesamte Mechanikmodul vom Elektronikmodul abgezogen bzw. wieder aufgesteckt werden kann, wobei jeweils das Heizelement durch die korrespondierende Öffnung in der rückwärtigen Wägeraumwandung zu führen ist.

Das haubenartige Mechanikmodul ist dann für eine Reinigung leicht zugänglich. Insbesondere kann es, da es keinerlei elektronische Bauteile enthält, ohne Weiteres in eine Spülmaschine gepackt werden. Das Heizelement, welches selbst auch Gegenstand von Verschmutzung sein kann, ragt bei abgenommenen Mechanikmodul frei zugänglich vom Grundkörper des Elektronikmoduls ab und ist ebenfalls für eine Reinigung leicht zugänglich.

Als Infrarotstrahler ausgebildete Heizelemente, insbesondere solche aus keramischem Material, sind aufgrund der spröden Materialeigenschaften der Keramik recht stoßempfindlich. Es sollte daher nach Möglichkeit vermieden werden, beim Ab- oder Ankoppeln des Mechanikmoduls mit dem Wägeraumdeckel oder einer Wägeraumwandung an das Heizelement zu stoßen. Andererseits sollte der Durchbruch in der rückwärtigen Wägeraumwandung, durch welchen das Heizelement in den Wägeraum hineinragt, möglichst klein sein. Zur Lösung u.a. dieses Zielkonfliktes ist bei einer Weiterbildung der Erfindung vorgesehen, dass parallel zu dem Heizelement wenigstens eine Führungsschiene von dem Grundkörper des Elektronikmoduls absteht, auf welche das Mechanikmodul mit korrespondierenden Führungsmitteln reversibel aufgeschoben ist. Beim Abziehen des Mechanikmoduls muss der Benutzer keine besondere Vorsicht walten lassen, da durch die Führungsschiene und die korrespondierenden Führungsmittel die Bewegungsfreiheitsgrade des Mechanikmoduls derart eingeschränkt sind, dass nur eine genau vorgegebene Abziehbewegung möglich ist, die selbstverständlich so zu gestalten ist, dass ein Kontakt zwischen dem Heizelement und den Wägeraumwandungen bzw. dem Wägeraumdeckel ausgeschlossen sind. Beim Aufschieben des Mechanikmoduls hingegen hat der Benutzer lediglich darauf zu achten, dass sich Führungsschiene und korrespondierende Führungsmittel finden, und während der Findungsphase ein Einstoßen am Heizelement zu vermeiden. Sobald sich Führungsschiene und Führungsmittel hingegen gefunden haben, sind die Bewegungsfreiheitsgrade der Aufschiebebewegung wieder so eingeschränkt, dass ein Kontakt zwischen Heizelement und Wägeraumwandung bzw. Wägeraumdeckel ausgeschlossen sind.

Häufig ist bei Trocknungswaagen der Wägeteller von einem ringförmigen Windschutz umgeben. Dieser soll während des Wägeprozesses verhindern, dass Luftturbulenzen innerhalb der Haube die Messung beeinträchtigen. Üblicherweise ist der Windschutz am Wägeraumboden fixiert. Dies ist jedoch während des Beschickungsprozesses ungünstig. Bei einer günstigen Ausführungsform der Erfindung ist hingegen vorgesehen, dass das Mechanikmodul weiter einen dem von den Wägeraumwandungen umgriffenen Raum angeordneten, ringförmigen Windschutz aufweist, der im geschlossenen Zustand der Haube den Wägetellerträger vollumfänglich umgreift. Mit anderen Worten ist bei dieser Ausführungsform der Windschutz zwischen den Wägeraumwandungen fixiert und Bestandteil des Mechanikmoduls.

Günstigerweise umfasst der Grundkörper des Elektronikmoduls einen Kopplungsdetektor, mittels dessen der jeweils aktuelle Kopplungszustand zwischen dem Elektronikmodul und dem Mechanikmodul detektierbar ist. Beispielsweise kann der Kopplungsdetektor als ein Mikroschalter ausgebildet sein, der gedrückt wird, sobald die rückwärtige Wägeraumwandung gegen den Grundkörper des Elektronikmoduls gepresst wird. Der Kopplungsdetektor kann mit der Steuerelektronik verbunden sein, welcher als eine Sicherheitsmaßnahme implementiert ist, sodass die Leistungselektronik das Heizelement nur dann mit Betriebsspannung beschickt, wenn das Mechanikmodul und das Elektronikmodul sicher miteinander gekoppelt sind.

Auch kann, wie bei einer weiteren bevorzugten Ausführungsform der Erfindung vorgesehen, der Grundkörper des Elektronikmoduls weiter einen Temperatursensor, einen Schwenkstellungsdetektor, eine Beleuchtungseinrichtung und/oder wenigstens eine Statusleuchte umfassen. Der Temperatursensor kann dabei vorteilhafterweise so ausgebildet sein, dass er mit seinem Sensorkopf parallel zu dem Heizelement durch einen Durchbruch in der rückwärtigen Wägeraumwandung ragt und sein elektronischer Anteil innerhalb des Grundkörpers des Elektronikmoduls angeordnet ist. Alternativ kann vorgesehen sein, dass ein gegen automatische Spülvorgänge unempfindlicher Sensorkopf des Temperatursensors innerhalb des von den Wägeraumwandungen umfassten Raumes angeordnet und über eine elektrische Kontaktstelle im Bereich der rückwärtigen Wägeraumwandung mit einer Elektronik im Grundkörper des Elektronikmoduls gekoppelt ist.

Der den genannten Ausführungsformen der Erfindung zugrundeliegende Gedanke ist die Konzentration sämtlicher das Heizelement betreffender Elektronik im Elektronikmodul, insbesondere im Grundkörper des Elektronikmoduls. In konsequenter Fortführung dieses Ansatzes bedeutet dies, dass, wie bevorzugt vorgesehen, der Grundkörper des Elektronikmoduls weiter eine Steuerungselektronik für den Betrieb des Heizelementes aufweist und die Steuerungselektronik in Kommunikationsverbindung mit einer in der Basis angeordneten Steuerungseinrichtung der Waage steht. Dies führt zu einer weitgehenden Unabhängigkeit von Basis und Haube, mithin von Waage und Heizvorrichtung. Sowohl das Heizelement selbst, wie auch seine Leistungselektronik und die zugeordnete Steuerungselektronik sind in der Haube, insbesondere in deren Elektronikmodul konzentriert. Zu den übrigen Bestandteilen des Messgerätes, insbesondere zu der in der Basis verkörperten Waage, muss lediglich eine Verbindung zur Ermöglichung einer Kommunikation auf vergleichsweise hohem Abstraktionsniveau existieren. Dadurch können unter Verwendung derselben Basis unterschiedliche Messgeräte für unterschiedliche Einsatzbereiche, die unterschiedliche Arten von Heizelementen und/oder unterschiedliche Leistungen von Heizelementen erfordern, gefertigt werden. Die mittels Kabel oder drahtlos angebundene Steuerelektronik in der Haube muss lediglich vergleichsweise einfache Befehle, wie Heizleistungsniveaus und/oder Zieltemperaturen empfangen. Die erforderlichen Befehle zur korrekten Ansteuerung des speziellen Heizelementes bzw. seiner Leistungselektronik werden von der spezialisierten Steuerungselektronik im Elektronikmodul erzeugt.

Im Hinblick auf die leichte Reinigbarkeit der Gesamtvorrichtung ist bevorzugt vorgesehen, dass die Basisoberfläche absatzfrei gestaltet ist. Mit anderen Worten bildet der Wägeraumboden eine ebene Fläche, die lediglich vertikal von dem Wägetellerträger durchragt wird.

Der Grundkörper des Elektronikmoduls ist bevorzugt mittels wenigstens eines den rückwärtigen Rand der Basisoberfläche umgreifenden, hakenförmigen Scharniers mit der Basis verbunden. Ein derartiges hakenförmiges Scharnier kann einerseits an der rückwärtigen Wand des Grundkörpers des Elektronikmoduls und andererseits an der rückwärtigen Wand des Basisgehäuses fixiert bzw. angelenkt sein. Die einander kontaktierenden Flächen, d.h. die Unterkanten der Wägeraumwandungen und der Wägeraumboden bleiben hiervon unbeeinflusst und können flach und leicht reinigbar gestaltet sein.

Bevorzugt ist das wenigstens eine hakenförmige Scharnier mit dem Grundkörper des Elektronikmoduls oder der Basis reversibel verbunden. Beispielsweise kann eine reversible Rastmechanik vorgesehen sein. Dies erlaubt eine leichte Entkopplung von Basis und Elektronikmodul, die im Hinblick auf eine leichte Austauschbarkeit der Haube durch den Endbenutzer vorteilhaft ist.

Günstigerweise ist die Basisoberfläche von einem auf einem Basisgrundkörper aufliegenden, abnehmbaren, als Wägeraumboden wirkenden Deckelblech gebildet. Das bedeutet, dass der eigentliche Wägeraumboden als separates Element gestaltet ist, der ebenso wie das Mechanikmodul leicht vom Rest des Messgerätes trennbar und leicht reinigbar, insbesondere in eine Spülmaschine einstellbar ist.

Im Hinblick auf die Reinigbarkeit problematisch ist der notwendige Durchbruch im Deckelblech im Bereich des das Deckelblech durchsetzenden Wägetellerträgers. Dieser ist bevorzugt recht groß ausgebildet, um das Aufsetzen und Abnehmen einfach und ohne Gefahr des Anstoßens an den Wägetellerträger zu gestalten. Andererseits birgt ein großes Loch die Gefahr, dass herabfallendes Wägegut unter das Deckelblech gelangt und die darunterliegenden Teile der Basis verschmutzt. Um dem entgegenzuwirken ist bei einer bevorzugten Weiterbildung der Erfindung vorgesehen, dass das Deckelblech eine von dem Wägetellerträger durchsetzte Aufnehmung aufweist, in der eine sich auf der Oberfläche des Deckelblechs abstützende und in einer Aufnahme des Basisgrundkörpers fixierte Dichtmanschette angeordnet ist. Diese Dichtmanschette erfüllt drei Funktionen. Erstens verkleinert sie den Durchbruch durch das Deckelblech auf das für die freie Beweglichkeit des Wägetellerträgers erforderliche Mindestmaß. Zweitens bildet sie mit ihrer kragenförmigen Auflage eine Verschmutzungs-Schutzstufe und drittens dient sie der Fixierung des Deckelblechs, da sie mit ihrem unteren Teil in der Aufnahme des Basisgrundkörpers fixiert ist und mit ihrem oberen Ende den Rand des Durchbruchs kragenartig überragt.

Dabei wird als besonders günstig angesehen, wenn die Dichtmanschette durch Schraub- oder Bajonettverbindung in der Aufnahme fixiert und ihre Höhe so dimensioniert ist, dass sie in Vertikalrichtung unter einer durch eine Membranelastizität des Deckelblechs erzeugten Federvorspannung steht. Die Bajonett- oder Schraubfixierung hat sich als besonders leicht handhabbar erwiesen. Ist die Dichtmanschette in ihrer Länge so dimensioniert, dass sie so weit eingeschraubt werden kann, dass ihr oberer Kragen das Deckelblech plastisch leicht nach unten biegt, wirkt das Deckelblech als Membranfeder, die den Kragen tendenziell nach oben zieht. Hierdurch wird jegliches Spiel in diesem Bereich ausgeglichen und die Dichtmanschette kraftschlüssig auch an einer Seitwärtsbewegung gehindert, die zu einer unerwünschten Kollision der Dichtmanschette mit dem Wägetellerträger führen könnte.

Der Fachmann wird verstehen, dass der Begriff des Deckelblechs in diesem Zusammenhang nicht auf spezielle Materialien, insbesondere nicht auf metallische Materialien beschränkt zu verstehen ist. Vielmehr soll mit dem Begriff Blech eine dünne, flächige und vorzugsweise membranfederartig elastische Einheit gemeint sein, die insbesondere auch aus Kunststoff bestehen kann.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine perspektivische Darstellung eines erfindungsgemäßen Messgerätes mit abgezogenem Mechanikmodul,
- Figur 2:: eine Explosionsdarstellung eines erfindungsgemäßen Messgerätes mit aufgeschobenem Mechanikmodul,

### Ausführliche Beschreibung bevorzugter Ausführungsformen

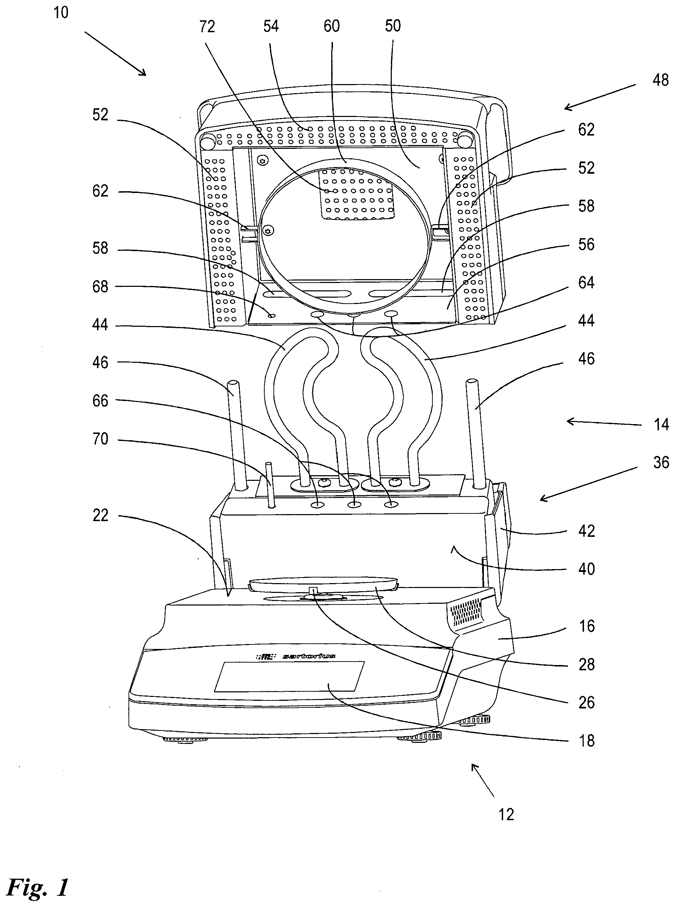

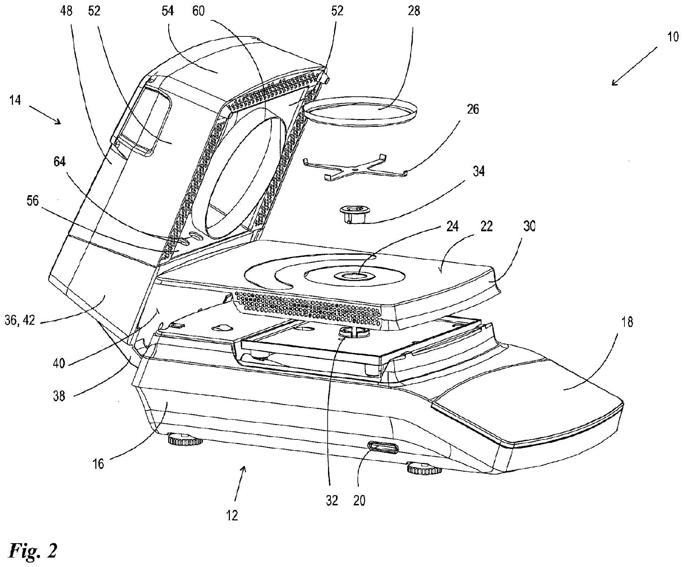

Gleiche Bezugszeichen in den Figuren deuten auf gleiche oder analoge Elemente hin. Die Figuren 1 und 2 zeigen eine Ausführungsform eines erfindungsgemäßen Messgerätes 10 zur thermogravimetrischen Materialfeuchtebestimmung in unterschiedlichen Ansichten und Darstellungen und sollen nachfolgend gemeinsam diskutiert werden.

Das Messgerät 10 ist im Wesentlichen aus zwei Komponenten zusammengesetzt, nämlich einer Basis 12 und einer schwenkbar an der Basis 12 angelenkten Haube 14. Die Basis 12 ist als eine Waage ausgebildet, die in einem Gehäuse 16 eine nicht näher dargestellte Wägevorrichtung, insbesondere eine solche, die nach dem Prinzip der elektromagnetischen Kompensation arbeitet, enthält. Ebenso ist in dem Gehäuse eine nicht näher dargestellte Steuerungselektronik zur Ansteuerung der Wägevorrichtung platziert. Im vorderen Bereich des Gehäuses 16 befindet sich eine als Display ausgebildete Benutzerschnittstelle 18; in einem seitlichen Bereich des Gehäuses 16 ist zudem eine elektrische Schnittstelle 20 angeordnet. Die Oberfläche 22 des Gehäuses 16 ist als eine absatzfreie Ebene gestaltet, die einen zentralen Durchbruch 24 aufweist, der im Montageendzustand von einem in den Figuren nicht näher dargestellten, vertikalen Arm eines Wägetellerträgers vertikal durchsetzt ist. Auf dem vertikalen Arm des Wägetellerträgers ist ein Kreuzarm 26 des Wägetellerträgers positioniert, auf den ein Wägeteller 28 zur Aufnahme von nicht dargestelltem Wägegut aufsetzbar ist. Das Gewicht eines auf dem Wägeteller 28 platzierten Wägegutes wirkt über den Wägetellerträger auf den nicht dargestellten Lastarm der Wägevorrichtung, die in Wechselwirkung mit ihrer Steuerungselektronik das Gewicht des Wägegutes bzw. dessen Gewichtsverlauf messen und in geeigneter Weise einem Benutzer zur Kenntnis bringen kann.

Bei der in den Figuren dargestellten, besonders vorteilhaften Ausführungsform der Erfindung ist die Oberfläche 22 als ein dünnwandiges Deckelblech 30 ausgebildet, welches, wie insbesondere in Figur 2 erkennbar, abnehmbar auf dem Gehäuse 16 angeordnet ist. Unterhalb des Deckelblechs 30 ist eine Bajonetthülse 32 angeordnet, welche den vertikalen Arm des Wägetellerträgers ringförmig umgreift. Ein Dichtring 34 mit einem korrespondierenden Bajonetteinsatz ist durch den Durchbruch 24 im Deckelblech 30 hindurchgeführt, wobei er einen ringförmigen Kragen aufweist, welcher auf dem Rand des Durchbruchs 24 aufliegt. Nach Einführung des Dichtringes 34 in die Bajonetthülse 32 können beide Elemente durch Drehung des Dichtrings 34 miteinander fixiert werden, wobei der Dichtring 34 so weit in die Bajonetthülse 32 hineingezogen wird, dass sein Kragen den Rand des Durchbruchs 24 geringfügig nach unten zieht, sodass der Dichtring 34 unter vertikal ausgerichteter Membranspannung des Deckelblechs 30 steht. Hierdurch wird zum einen der Dichtring 34 gegen ungewolltes Spiel gesichert; gleichzeitig wird das Deckelblech 30 sicher auf dem Gehäuse 16 fixiert.

Die Haube 14 ist aus zwei Modulen zusammengesetzt, die, wie insbesondere in Figur 1 erkennbar, voneinander separierbar sind. Ein Elektronikmodul 36 ist über hakenförmige Scharniere 38 an der rückwärtigen Wandung der Basis 12 schwenkbar angelenkt. Die Anlenkung erfolgt dabei so, dass die Haube 14 im zugeklappten Zustand mit der Unterseite auf der Oberfläche 22 der Basis 12, d.h. auf einem Bereich des Deckelblechs 30, in Teilbereichen aufliegen kann. Der Grundkörper 42 enthält in seinem Inneren eine Leistungselektronik für zwei Heizelemente 44 und bevorzugt zusätzlich eine Steuerungselektronik für die Heizelemente bzw. für deren Leistungselektronik. Die Heizelemente 44 selbst sind nicht in den Grundkörper 42 integriert. Vielmehr ragen sie aus dessen vorderer Stirnseite heraus. Seitlich der Heizelemente sind Führungsstangen 46 angeordnet, die parallel zu den Heizelementen 44 aus dem Grundkörper 42 herausragen.

Das zweite Modul der Haube 14, welches hier als Mechanikmodul 48 bezeichnet wird, umfasst im Wesentlichen einen Wägeraumdeckel 50, zwei seitliche Wägeraumwandungen 52, eine vordere Wägeraumwandung 54 und eine rückwärtige Wägeraumwandung 56, die gemeinsam einen nach unten offenen, ansonsten im Wesentlichen geschlossen Raum bilden. Im zugeklappten Zustand der Haube 14 bilden der Deckel 50 und die Wandungen 52, 54, 56 gemeinsam mit der Oberfläche 22 der Basis 12 einen Wägeraum, der den Wägeteller 52 umgibt.

In der rückwärtigen Wägeraumwandung 56 sind schlitzartige Durchbrüche 58 angeordnet, die so dimensioniert sind, dass die Heizelemente 44 bei einem linearen Aufschieben des Mechanikmoduls 48 auf die Führungsstangen 46 durch sie hindurchgreifen und in den Wägeraum ragen können. Hierzu sind die Seitenwandungen 52 des Mechanikmoduls 48 mit nicht dargestellten Führungskanälen ausgestattet, welche zu den Führungsstangen 46 korrespondierend dimensioniert sind. Figur 1 zeigt das erfindungsgemäße Messgerät mit abgezogenem Mechanikmodul; Figur 2 zeigt es mit aufgeschobenem Mechanikmodul 48.

Im Inneren des von den Wandungen 52, 54, 56 umgriffenen Raumes ist ein ringförmiger Windschutz 60 angeordnet, der bei der gezeigten Ausführungsform über Stege 62 an den Seitenwandungen 52 fixiert ist. Der Windschutz 60 ist so dimensioniert und angeordnet, dass er im zugeklappten Zustand der Haube 14 den Wägeteller 28 ringförmig umgreift.

Die rückwärtige Wandung 56 des Mechanikmoduls 48 weist zudem zusätzliche Öffnungen 64 auf, durch welche Licht von an der Stirnseite des Grundkörpers 42 angeordneten Beleuchtungsmitteln 66 hindurchtreten kann. Eine weitere Durchbrechung 68 der rückwärtigen Wandung 56 des Mechanikmoduls 48 wird im endmontierten Zustand von einem Temperatursensor 70 durchsetzt, der parallel zu den Führungsstangen 46 von der Stirnseite des Grundkörpers 42 abragt. Mit ihm lässt sich bei Betrieb die Temperatur im Wägeraum erfassen.

Schließlich ist der Wägeraumdeckel 50 des Mechanikmoduls 48 mit einem Sichtfenster 72 versehen, durch welches die Vorgänge im Wägeraum bei Betrieb beobachtbar sind. Das Mechanikmodul 48 lässt sich im aufgeschobenen Zustand am Grundkörper 42 fixieren, vorzugsweise mit einer nicht im Detail dargestellten Rastvorrichtung.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 10: Messgerät
- 12: Basis
- 14: Haube
- 16: Gehäuse
- 18: Benutzerschnittstelle
- 20: elektrische Schnittstelle
- 22: Oberfläche von 12
- 24: Ausnehmung in 22
- 26: Kreuzarm des Wägetellerträgers
- 28: Wägeteller
- 30: Deckelblech
- 32: Bajonetthülse
- 34: Dichtring
- 36: Elektronikmodul
- 38: hakenförmiges Scharnier
- 40: Unterseite von 42
- 42: Grundkörper von 36
- 44: Heizelement
- 46: Führungsstange
- 48: Mechanikmodul
- 50: Wägeraumdeckel
- 52: seitliche Wägeraumwandung
- 54: vordere Wägeraumwandung
- 56: rückwärtige Wägeraumwandung
- 58: Durchbruch in 56
- 60: Windschutz
- 62: Steg
- 64: Durchbruch in 56
- 66: Beleuchtungsmittel
- 68: Durchbruch in 56
- 70: Temperatursensor
- 72: Sichtfenster

## Patentansprüche

1. Messgerät zur thermogravimetrischen Materialfeuchtebestimmung, umfassend
- eine als eine Waage ausgebildete Basis (12) mit einer wenigstens einen Wägeraumboden bildenden Basisoberfläche (22), die von einem Wägetellerträger durchsetzt ist, und
- eine schwenkbar mit der Basis (12) verbundene Haube (14), welche einen Wägeraumdeckel (50) und Wägeraumwandungen (52, 54, 56) sowie wenigstens ein in den von den Wägeraumwandungen (52, 54, 56) umgriffenen Raum hinein wirkendes Heizelement (44), welches mit einer Leistungselektronik in elektrischem Kontakt steht, aufweist,
**dadurch gekennzeichnet,**
**dass** die Haube (14) aus zwei separaten Modulen (36, 48) besteht, nämlich einem das Heizelement (44) und die Leistungselektronik umfassenden Elektronikmodul (36) und einem den Wägeraumdeckel (50) und sämtliche Wägeraumwandungen (52, 54, 56) umfassenden Mechanikmodul (48), wobei das Mechanikmodul (48) mit dem Elektronikmodul (36) starr und reversibel derart gekoppelt ist, dass das von einem schwenkbar mit der Basis (12) verbundenen und die Leistungselektronik umschließenden Grundkörper (42) des Elektronikmoduls (36) abstehende Heizelement (44) durch einen korrespondierenden Durchbruch (58) in der rückwärtigen Wägeraumwandung (56) ragt.

2. Messgerät nach Anspruch 1,
**dadurch gekennzeichnet,**
**dass** parallel zu dem Heizelement (44) wenigstens eine Führungsschiene (46) von dem Grundkörper (42) des Elektronikmoduls (36) absteht, auf welche das Mechanikmodul (48) mit korrespondierenden Führungsmitteln reversibel aufgeschoben ist.

3. Messgerät nach einem der vorangehenden Ansprüche,
**dadurch gekennzeichnet,**
**dass** das Mechanikmodul (48) weiter einen in dem von den Wägeraumwandungen (52, 54, 56) umgriffenen Raum angeordneten, ringförmigen Windschutz (60) aufweist, der im geschlossenen Zustand der Haube (14) den Wägetellerträger vollumfänglich umgreift.

4. Messgerät nach einem der vorangehenden Ansprüche,
**dadurch gekennzeichnet,**
**dass** der Grundkörper (42) des Elektronikmoduls (36) weiter einen Kopplungsdetektor umfasst, mittels dessen der jeweils aktuelle Kopplungszustand zwischen dem Elektronikmodul (36) und dem Mechanikmodul (48) detektierbar ist.

5. Messgerät nach einem der vorangehenden Ansprüche,
**dadurch gekennzeichnet,**
**dass** der Grundkörper (42) des Elektronikmoduls (36) weiter einen Temperatursensor (70), einen Schwenkstellungsdetektor, eine Beleuchtungseinrichtung und/oder wenigstens eine Statusleuchte umfasst.

6. Messgerät nach einem der vorangehenden Ansprüche,
**dadurch gekennzeichnet,**
**dass** der Grundkörper (42) des Elektronikmoduls (36) weiter eine Steuerungselektronik für den Betrieb des Heizelementes (44) aufweist und die Steuerungselektronik in Kommunikationsverbindung mit einer in der Basis (12) angeordneten Steuerungseinrichtung der Waage steht.

7. Messgerät nach einem der vorangehenden Ansprüche,
**dadurch gekennzeichnet,**
**dass** die Basisoberfläche (22) absatzfrei gestaltet ist.

8. Messgerät nach einem der vorangehenden Ansprüche,
**dadurch gekennzeichnet,**
**dass** der Grundkörper (42) des Elektronikmoduls (36) mittels wenigstens eines den rückwärtigen Rand der Basisoberfläche (22) umgreifenden hakenförmigen Scharniers (38) mit der Basis (12) verbunden ist.

9. Messgerät nach Anspruch 8,
**dadurch gekennzeichnet,**
**dass** das wenigstens eine hakenförmige Scharnier (38) mit dem Grundkörper (42) des Elektronikmoduls (36) oder der Basis (12) reversibel verbunden ist.

10. Messgerät nach einem der vorangehenden Ansprüche,
**dadurch gekennzeichnet,**
**dass** die Basisoberfläche (22) von einem auf einem Basisgrundkörper aufliegenden, abnehmbaren Deckelblech (30) gebildet ist.

11. Messgerät nach Anspruch 10,
**dadurch gekennzeichnet,**
**dass** das Deckelblech (30) eine von dem Wägetellerträger durchsetzte Ausnehmung (24) aufweist, in der eine sich auf der Oberfläche des Deckelblechs (30) abstützende und in einer Aufnahme (32) des Basisgrundkörpers fixierte Dichtmanschette (34) angeordnet ist.

12. Messgerät nach Anspruch 11,
**dadurch gekennzeichnet,**
**dass** die Dichtmanschette (34) durch Schraub- oder Bajonettverbindung in der Aufnahme (32) fixiert und ihre Höhe so dimensioniert ist dass sie in Vertikalrichtung unter einer durch eine Membranelastizität des Deckblechs (30) erzeugten Federvorspannung steht.

## Claims

1. Measuring apparatus for thermogravimetric determination of material moisture, comprising
- a base (12), which is constructed as a weighing machine, with at least one base surface (22), which forms a weighing space floor and which is penetrated by a weighing plate support, and
- a hood (14), which is pivotably connected with the base (12) and which comprises a weighing space ceiling (50) and weighing space walls (52, 54, 56) as well as at least one heating element (44), which acts in the space surrounded by the weighing space walls (52, 54, 56) and which is disposed in electrical contact with an electronic power unit,
**characterised in that**
the hood (14) consists of two separate modules (36, 48), namely an electronic module (36) comprising the heating element (44) and the electronic power unit and a mechanical module (48) comprising the weighing space ceiling (50) and all weighing space walls (52, 54, 56), wherein the mechanical module (48) is so rigidly and reversibly coupled with the electronic module (36) that the heating element (44), which protrudes from a base body (42) pivotably connected with the base (12) and surrounding the electronic power unit, of the electronic module (36) projects through a corresponding passage (58) in the rear weighing space wall (56).

2. Measuring apparatus according to claim 1, **characterised in that** at least one guide rail (46) onto which the mechanical module (48) is reversibly pushed by corresponding guide means protrudes from the base body (42) of the electronic module (36) parallel to the heating element (44).

3. Measuring apparatus according to one of the preceding claims, characterised ins that the mechanical module (48) additionally comprises an annular draught protector (60) which is arranged in the space surrounded by the weighing space walls (52, 54, 56) and which in the closed state of the hood (14) engages around the full circumference of the weighing plate support.

4. Measuring apparatus according to any one of the preceding claims, **characterised in that** the base body (42) of the electronic module (36) further comprises a coupling detector by means of which the respective instantaneous coupling state between the electronic module (36) and the mechanical module (48) is detectible.

5. Measuring apparatus according to any one of the preceding claims, **characterised in that** the base body (42) of the electronic module (36) further comprises a temperature sensor (70), a pivot setting detector, a lighting device and/or at least one status light.

6. Measuring apparatus according to any one of the preceding claims, **characterised in that** the base body (42) of the electronic module (36) further comprises electronic control means for operation of the heating element (44) and the electronic control means is in communicating connection with a control device, which is arranged in the base (12), of the weighing machine.

7. Measuring apparatus according to any one of the preceding claims, **characterised in that** the base surface (22) is formed to be step-free.

8. Measuring apparatus according to any one of the preceding claims, **characterised in that** the base body (42) of the electronic module (36) is connected with the base (12) by means of at least one hook-shaped hinge (38) engaging over the rear edge of the base surface (22).

9. Measuring apparatus according to claim 8, **characterised in that** the at least one hook-shaped hinge (38) is reversibly connected with the base body (42) of the electronic module (36) or the base (12).

10. Measuring apparatus according to any one of the preceding claims, **characterised in that** the base surface (22) is formed by a removable cover plate (30) resting on a base bottom body.

11. Measuring apparatus according to claim 10, **characterised in that** the cover plate (30) has a recess (24) which is penetrated by the weighing plate support and in which is arranged a sealing sleeve (34) supported on the surface of the cover plate (30) and fixed in a receptacle (32) of the base bottom body.

12. Measuring apparatus according to claim 11, **characterised in that** the sealing sleeve (34) is fixed in the receptacle (32) by a screw or bayonet connection and the height thereof is so dimensioned that in vertical direction it is disposed under a spring bias generated by a diaphragm resilience of the cover plate (30).

## Revendications

1. Appareil de mesure pour la détermination thermogravimétrique de l'humidité des matériaux, comprenant
- une base (12) réalisée sous la forme d'une balance, pourvue d'une surface de base (22) qui forme au moins un fond de chambre de pesée et qui est traversée par un support de plateau de pesée, et
- un capot (14) relié de manière pivotante à la base (12), lequel comprend un couvercle de chambre de pesée (50) et des parois de chambre de pesée (52, 54, 56) ainsi qu'au moins un élément chauffant (44) qui agit à l'intérieur de l'espace entouré par les parois de chambre de pesée (52, 54, 56) et qui est en contact électrique avec une électronique de puissance,
**caractérisé**
**en ce que** le capot (14) est constitué de deux modules (36, 48) séparés, à savoir d'un module électronique (36) comportant l'élément chauffant (44) et l'électronique de puissance et d'un module mécanique (48) comportant le couvercle de chambre de pesée (50) et toutes les parois de chambre de pesée (52, 54, 56), dans lequel le module mécanique (48) est accouplé de manière rigide et réversible au module électronique (36), de sorte que l'élément chauffant (44) faisant saillie d'un corps de base (42) du module électronique (36), lequel corps de base est relié de manière pivotante à la base (12) et entoure l'électronique de puissance, dépasse par une ouverture (58) correspondante dans la paroi de chambre de pesée (56) arrière.

2. Appareil de mesure selon la revendication 1,
**caractérisé**
**en ce qu'**au moins un rail de guidage (46), sur lequel le module mécanique (48) est poussé de manière réversible à l'aide de moyens de guidage correspondants, fait saillie du corps de base (42) du module électronique (36) parallèlement à l'élément chauffant (44).

3. Appareil de mesure selon l'une quelconque des revendications précédentes,
**caractérisé**
**en ce que** le module mécanique (48) comprend en outre un paravent (60) annulaire qui est agencé dans l'espace entouré par les parois de chambre de pesée (52, 54, 56) et qui entoure intégralement le support de plateau de pesée une fois le capot (14) fermé.

4. Appareil de mesure selon l'une quelconque des revendications précédentes,
**caractérisé**
**en ce que** le corps de base (42) du module électronique (36) comporte en outre un détecteur d'accouplement, au moyen duquel l'état d'accouplement actuel entre le module électronique (36) et le module mécanique (48) respectivement peut être détecté.

5. Appareil de mesure selon l'une quelconque des revendications précédentes,
**caractérisé**
**en ce que** le corps de base (42) du module électronique (36) comporte en outre un capteur de température (70), un détecteur de position de pivotement, un dispositif d'éclairage et/ou au moins un voyant de statut.

6. Appareil de mesure selon l'une quelconque des revendications précédentes,
**caractérisé**
**en ce que** le corps de base (42) du module électronique (36) comprend en outre une électronique de commande pour le fonctionnement de l'élément chauffant (44) et l'électronique de commande est en liaison de communication avec un dispositif de commande de la balance agencé dans la base (12).

7. Appareil de mesure selon l'une quelconque des revendications précédentes,
**caractérisé**
**en ce que** la surface de base (22) est exempte de gradin.

8. Appareil de mesure selon l'une quelconque des revendications précédentes,
**caractérisé**
**en ce que** le corps de base (42) du module électronique (36) est relié à la base (12) au moyen d'au moins une charnière (38) en forme de crochet entourant la paroi arrière de la surface de base (22).

9. Appareil de mesure selon la revendication 8,
**caractérisé**
**en ce que** ladite au moins une charnière (38) en forme de crochet est reliée de manière réversible au corps de base (42) du module électronique (36) ou à la base (12).

10. Appareil de mesure selon l'une quelconque des revendications précédentes,
**caractérisé**
**en ce que** la surface de base (22) est formée par une tôle de couvercle (30) amovible reposant sur un corps de base.

11. Appareil de mesure selon la revendication 10,
**caractérisé**
**en ce que** la tôle de couvercle (30) présente un évidement (24) traversé par le support de plateau de pesée, évidement dans lequel est agencé un manchon d'étanchéité (34) s'appuyant sur la surface de la tôle de couvercle (30) et fixé dans un logement (32) du corps de base.

12. Appareil de mesure selon la revendication 11,
**caractérisé**
**en ce que** le manchon d'étanchéité (34) est fixé dans le logement (32) au moyen d'une liaison vissée ou à baïonnette et sa hauteur est dimensionnée de telle sorte qu'il se tient dans le sens vertical sous l'effet d'une précontrainte de ressort générée par une élasticité membranaire de la tôle de couvercle (30) .
